# EUROPÄISCHE PATENTANMELDUNG

(11) **EP 4 095 419 A1**
(43) Veröffentlichungstag der Anmeldung: **30.11.2022**
(21) Anmeldenummer: 22173417.1
(22) Anmeldetag: 16.05.2022
(51) Int. Cl.: F16J 15/3228, F16J 15/3284, H01R 39/02, H01R 39/12, H02K 7/00, H02K 11/40

(54) **ANORDNUNG ZUR HERSTELLUNG EINER ELEKTRISCH LEITFÄHIGEN VERBINDUNG ZWISCHEN EINEM ERSTEN MASCHINENELEMENT UND EINEM ZWEITEN MASCHINENELEMENT**

(30) Priorität: 28.05.2021 DE 102021113901
(71) Anmelder: Carl Freudenberg KG, 69469 Weinheim (DE)
(72) Erfinder: Bantz, Marlene, 67483 Edesheim (DE); Neuberger, Soeren, 68766 Hockenheim (DE); Colineau, Francois, 69469 Weinheim (DE); Hintenlang, Günter, 69518 Abtsteinach (DE); Kutschera, Gerhard, 64646 Heppenheim (DE); Hofmann, Jens, 68305 Mannheim (DE); Herweck, Tim, 68623 Lampertheim (DE)

(57) **Zusammenfassung**

Anordnung (1) zur Herstellung einer elektrisch leitfähigen Verbindung zwischen einem ersten Maschinenelement (2) und einem zweiten Maschinenelement (3), umfassend eine elektrisch leitfähig ausgebildete Scheibe (4), welche an einem Tragkörper (5) festgelegt ist, wobei die Scheibe (4) mit einer Bohrung (6) zur Aufnahme eines zweiten Maschinenelementes (3) versehen ist, wobei ausgehend von der umlaufenden Kante (7) der Bohrung (6) Schlitze (8) in die Scheibe (4) eingebracht sind.

## Beschreibung

Die Erfindung betrifft eine Anordnung zur Herstellung einer elektrisch leitfähigen Verbindung zwischen einem ersten Maschinenelement und einem zweiten Maschinenelement, umfassend eine elektrisch leitfähig ausgebildete Scheibe, welche an einem Tragkörper festgelegt ist, wobei die Scheibe mit einer Bohrung zur Aufnahme eines zweiten Maschinenelementes versehen ist.

Aus der DE 10 2018 124 256 A1 ist eine Anordnung bekannt, bei welcher eine Dichtscheibe aus einem elektrisch leitfähigen Vliesstoff eine elektrisch leitfähige Verbindung zwischen einem ersten Maschinenelement und einem zweiten Maschinenelement herstellt. Dabei können das erste Maschinenelement und das zweite Maschinenelement Bestandteile eines elektrischen Antriebs eines Kraftfahrzeugs sein.

Die elektrisch leitfähige Scheibe kontaktiert nach Art einer Dichtscheibe das innenliegende Maschinenelement direkt und das äußere Maschinenelement zumindest indirekt über einen Tragring. Die Scheibe ermöglicht einen Potenzialausgleich zwischen erstem Maschinenelement und zweitem Maschinenelement und verhindert mechanische Beschädigungen, die entstehen können, wenn unterschiedlich große Potenziale der Maschinenelemente durch einen elektrischen Spannungsdurchschlag ausgeglichen werden. Ein Spannungsdurchschlag kann einen Materialabtrag an dem Maschinenelement mit relativ geringerer Ladung und eine Veränderung des Materialgefüges in dem Bereich bewirken, in dem der Spannungsdurchschlag erfolgt.

Je nach Ausgestaltung der Scheibe ist die Flexibilität des Materials der Scheibe sehr begrenzt, so dass sich die Lebensdauer der Anordnung verkürzen und der Verschleiß des zweiten Maschinenelementes, an welchem die Scheibe anliegt, erhöhen kann.

Der Erfindung liegt die Aufgabe zugrunde, eine Anordnung zur Herstellung einer elektrisch leitfähigen Verbindung bereitzustellen, welche eine lange Gebrauchsdauer aufweist.

Diese Aufgabe wird mit den Merkmalen von Anspruch 1 gelöst. Auf vorteilhafte Ausgestaltungen nehmen die Unteransprüche Bezug.

Die erfindungsgemäße Anordnung zur Herstellung einer elektrisch leitfähigen Verbindung zwischen einem ersten Maschinenelement und einem zweiten Maschinenelement umfasst eine elektrisch leitfähig ausgebildete Scheibe, welche an einem Tragkörper festgelegt ist, wobei die Scheibe mit einer Bohrung zur Aufnahme eines zweiten Maschinenelementes versehen ist, wobei ausgehend von der umlaufenden Kante der Bohrung Schlitze in die Scheibe eingebracht sind.

Durch die Schlitze ist die Scheibe innenseitig flexibler und kann sich dadurch besser an die Gestalt des zweiten Maschinenelementes anpassen. Insbesondere ist vorteilhaft, dass die Anpressung der Scheibe an das zweite Maschinenelement reduziert werden kann, so dass die Scheibe und das zweite Maschinenelement einem geringeren Verschleiß unterworfen sind, so dass die Anordnung eine verlängerte Gebrauchsdauer aufweist. Gleichzeitig ist aber stets gewährleistet, dass die Scheibe das zweite Maschinenelement kontaktiert und dass eine elektrisch leitfähige Verbindung zwischen erstem Maschinenelement und zweitem Maschinenelement gegeben ist. Das zweite Maschinenelement kann beispielsweise eine Welle sein, welche aus einem als Gehäuse ausgebildeten ersten Maschinenelement herausgeführt ist. Die Welle kann Bestandteil eines elektrischen Antriebs eines Elektrofahrzeugs sein.

Vorzugsweise liegt die montierte Scheibe unter radialer Vorspannung an dem zweiten Maschinenelement an und ist dabei an dem freien Ende in axialer Richtung abgebogen. Im Bereich der Schlitze spreizt sich die Scheibe dabei auf, wodurch sich die radiale Anpressung der Scheibe an das zweite Maschinenelement reduziert.

Die Schlitze können in radialer Richtung verlaufen. Dadurch ergeben sich in Umfangsrichtung betrachtet gleichmäßige Eigenschaften, insbesondere im Hinblick auf die Anpressung der Scheibe an das Maschinenelement.

Die Scheibe kann mehrere Schlitze aufweisen, welche gleichmäßig über den Umfang der Scheibe verteilt sind. Dadurch können punktförmige Lasten vermieden werden, welche zu einem vorzeitigen Verschleiß führen können.

Die Schlitze können auf der der Kante abgewandten Seite in eine Erweiterung münden. Durch die Erweiterung kann die Kerbwirkung reduziert werden, welche durch mechanische Beanspruchung der Scheibe im Bereich der Schlitze entsteht und welche zu einem Weiterreißen der Schlitze führen kann. Durch die Erweiterung reduziert sich die Kerbwirkung und es ergeben sich insgesamt verbesserte mechanische Eigenschaften. Die Erweiterung ist vorzugsweise in Form einer kreisförmigen Ausnehmung, beispielsweise als Bohrung, ausgebildet. Dadurch ist das innere Ende des Schlitzes abgerundet und es ergeben sich verbesserte mechanische Eigenschaften, insbesondere in Bezug auf die Gebrauchsdauer. Eine weitere Verbesserung ergibt sich, wenn der Durchmesser der Erweiterung größer ist als der Abstand der beiden den Schlitz begrenzenden Kanten. Die Erweiterung kann alternativ auch oval oder sichelförmig ausgebildet sein.

Über den Umfang betrachtet kann jeder zweite Schlitz in eine Erweiterung münden. Bei dieser Ausgestaltung ist die Herstellung vereinfacht, so dass die Herstellung der Scheibe kostengünstig ist.

Die Scheibe kann aus porösem Material ausgebildet sein. Poröse Materialien weisen eine geringe Dichte auf und gute mechanische Eigenschaften auf. Besonders vorteilhafte poröse Materialien sind dabei Vliesstoffe. Vliesstoffe weisen hervorragende mechanische Eigenschaften auf und sich kostengünstig herstellbar. Zur weiteren Verbesserung kann der Vliesstoff mit einem Dichtungsmaterial, beispielsweise mit PTFE, imprägniert sein. In der Ausgestaltung mit einer Imprägnierung aus Dichtungsmaterial kann die Scheibe auch als Dichtscheibe fungieren.

Zur Herstellung der elektrischen Leitfähigkeit der Scheibe können die Fasern des Vliesstoffes aus elektrisch leitfähigem Material bestehen oder ein elektrisch leitfähiges Material umfassen, beispielsweise Silber. Es ist auch denkbar, dass die Scheibe mit elektrisch leitfähigen Partikeln ausgerüstet ist. Beispielsweise ist es denkbar, die Matrix des Vliesstoffes mit elektrisch leitfähigen Partikeln zu versehen. Elektrisch leitfähige Partikel können beispielsweise aus Leitruß oder aus Metallpartikeln bestehen.

Eine besonders gute elektrische Leitfähigkeit ergibt sich, wenn die Scheibe mit einer elektrisch leitfähigen Imprägnierung versehen ist. Derartige elektrisch leitfähige Imprägnierungen sind beispielsweise silberhaltige Dispersionen, wobei die Dispersion eine mit Silberpartikeln versehene Latex-Dispersion sein kann. Die Imprägnierung kann dabei die Scheibe lediglich nur teilweise, beispielsweise einseitig durchdringen oder die Scheibe vollständig durchdringen. Bei einer leitfähigen Imprägnierung ist insbesondere vorteilhaft, dass eine Leitfähigkeit auch noch dann gegeben ist, wenn sich verschleißbedingt ein Materialabtrag an der Scheibe ergeben hat. Je nach Ausbildung der Imprägnierung kann sich dabei das Problem ergeben, dass die Flexibilität und Biegefähigkeit der Scheibe herabgesetzt ist, was in montiertem Zustand der Scheibe mit einer erhöhten Anpressung der Scheibe an das zweite Maschinenelement einhergeht. Durch die erfindungsgemäß in die Scheibe eingebrachten Schlitze kann sich die Scheibe jedoch aufspreizen, wenn diese auf das zweite Maschinenelement aufgeschoben wird. Dadurch verringert sich die Anpressung der Scheibe an das zweite Maschinenelement, so dass Reibung und der Verschleiß reduziert sind.

Vorzugsweise ist der Tragkörper elektrisch leitfähig ausgebildet. Bei dieser Ausgestaltung ist es möglich, dass die Scheibe nicht unmittelbar an dem ersten Maschinenelement festgelegt ist, sondern das erste Maschinenelement über den Tragkörper elektrisch kontaktiert. Dabei kann der Tragkörper einen Innenring und einen Außenring aufweisen, wobei die Scheibe zwischen Innenring und Außenring festgelegt ist. Bei dieser Ausgestaltung kann die Scheibe mittels einer Klemmverbindung an dem Tragring festgelegt sein, so dass die Anordnung besonders einfach und kostengünstig herstellbar ist.

Die Erstreckung der Schlitze kann in radialer Richtung zwischen 25 Prozent und 75 Prozent der Erstreckung der Scheibe von der Bohrung bis zur Außenkante betragen. Besonders bevorzugt beträgt die Erstreckung der Schlitze in radialer Richtung 50 Prozent der Erstreckung der Scheibe von der Bohrung bis zur Außenkante. Bei dieser Ausgestaltung ergibt sich eine Anordnung mit besonders geringem Verschleiß bei gleichzeitig geringem elektrischem Widerstand zwischen erstem Maschinenelement und zweitem Maschinenelement.

Die einander zugewandten Kanten der Schlitze können zueinander beabstandet sein. Im unmontierten, unbelasteten Zustand sind dabei die Kanten der Schlitze der Scheibe zueinander beabstandet. Im Zusammenhang mit der Anordnung von Bohrungen an der der Kante abgewandten Seite ergibt sich eine schlüssellochartige Ausgestaltung der Schlitze, welche mit besonders vorteilhaften mechanischen Eigenschaften und einer langen Lebensdauer der Scheibe einhergeht.

Einige Ausgestaltungen der erfindungsgemäßen Anordnung werden nachfolgend anhand der Figuren näher erläutert. Diese zeigen, jeweils schematisch:
- Fig. 1: eine Anordnung im Schnitt;
- Fig. 2: in der Draufsicht eine Scheibe mit über den Umfang verteilten Schlitzen;
- Fig. 3: in der Draufsicht eine Scheibe mit über den Umfang verteilten Schlitzen,
- Fig. 4: in der Draufsicht eine Scheibe, bei welcher jeder zweite Schlitz in eine Erweiterung mündet und einander zugewandte Kanten der Schlitze zueinander beabstandet sind.

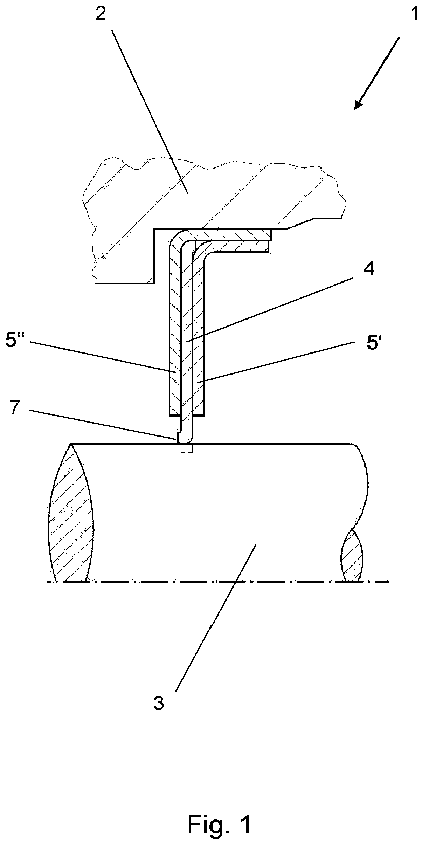

Figur 1 zeigt eine Anordnung 1 zur Herstellung einer elektrisch leitfähigen Verbindung zwischen einem ersten Maschinenelement 2 und einem zweiten Maschinenelement 3. Bei der vorliegenden Ausgestaltung ist das erste Maschinenelement 2 ein Gehäuse und das zweite Maschinenelement 3 eine rotierbar gelagerte Welle. Gehäuse und Welle bilden einen Bestandteil eines Elektroantriebs für ein Elektrofahrzeug.

Die Anordnung 1 umfasst ferner eine elektrisch leitfähig ausgebildete Scheibe 4, bestehend aus einem mit PFTE getränkten Vliesstoff. Insofern fungiert die Scheibe 4 auch als Dichtscheibe zur Abdichtung des Spaltes zwischen erstem Maschinenelement 2 und zweitem Maschinenelement 3. Zur Herstellung der elektrischen Leitfähigkeit ist die Scheibe 4 mit einer silberhaltigen Imprägnierung versehen. Die Imprägnierung ist bei der vorliegenden Ausgestaltung eine mit Silberpartikeln versehene Latex-Dispersion, wobei die Imprägnierung die Scheibe 4 vollständig durchdringt.

Die Scheibe 4 ist mit einer Bohrung 6 zur Aufnahme des zweiten Maschinenelementes 3 versehen. Der Tragkörper 5 weist einen Innenring 5' und einen Außenring 5" auf, wobei die Scheibe 4 zwischen Innenring 5' und Außenring 5" festgelegt ist. Der Tragkörper 5 samt Innenring 5' und Außenring 5" ist elektrisch leitfähig ausgebildet und besteht aus einem Stahlwerkstoff.

In montiertem Zustand liegt die Scheibe 4 mit radialer Vorspannung an dem zweiten Maschinenelement 3 an und ist an dem freien Ende in axialer Richtung abgebogen. Dabei spreizen sich die in die Scheibe 4 eingebrachten Schlitze 8 auf.

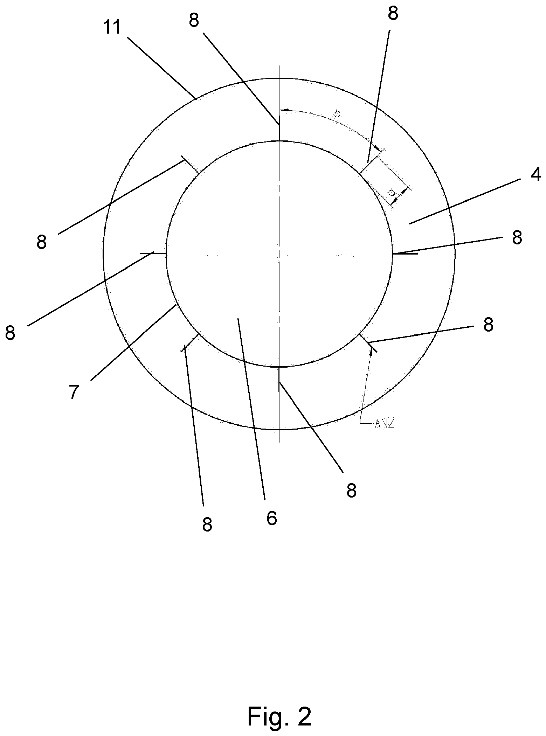

Figur 2 zeigt eine erste Ausgestaltung einer Scheibe 4 für die in Figur 1 gezeigte Anordnung 1. Bei der in Figur 2 gezeigten Scheibe 4 sind ausgehend von der umlaufenden Kante 7 der Bohrung 6 Schlitze 8 in die Scheibe 4 eingebracht. Die Schlitze 8 verlaufen in radialer Richtung und sind gleichmäßig über den Rand der Scheibe 4 verteilt. Die Erstreckung der Schlitze 8 in radialer Richtung beträgt 50 Prozent der Erstreckung der Scheibe 4 von der Bohrung 6 bis zur Außenkante 11.

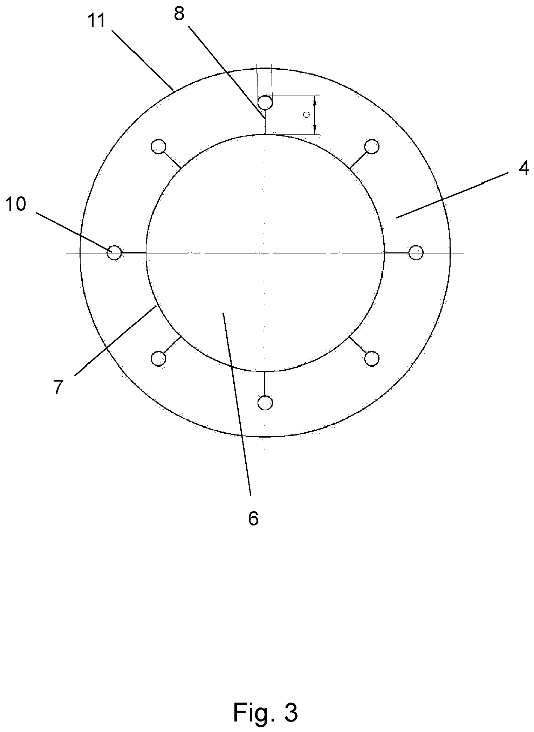

Figur 3 zeigt eine Weiterbildung der in Figur 2 gezeigten Scheibe 4. Bei der in Figur 3 gezeigten Scheibe 4 münden die Schlitze 8 auf der der Kante 7 abgewandten Seite in eine Erweiterung 10. Die Erweiterung 10 ist kreisförmig in Form einer Bohrung ausgebildet. Der Durchmesser der kreisförmigen Erweiterung 10 ist größer als der Abstand der beiden den Schlitz 8 begrenzenden Kanten 12.

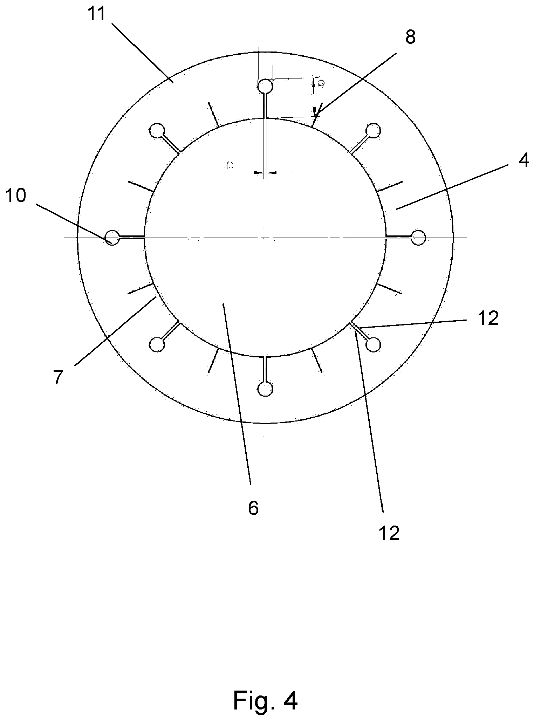

Figur 4 zeigt eine Weiterbildung der in Figur 2 oder in Figur 3 gezeigten Scheibe 4. Bei der in Figur 4 gezeigten Scheibe 4 mündet über den Umfang betrachtet jeder zweite Schlitz 8 in einer Erweiterung 10. Bei den mit der Erweiterung 10 ausgerüsteten Schlitzen 8 sind ferner die einander zugewandten Kanten 12 der Schlitze 8 zueinander beabstandet. Prinzipiell ist aber auch denkbar, dass jeder Schlitz 8 der Scheibe 4 mit einer Erweiterung 10 ausgerüstet ist, wobei die einander zugewandten Kanten 12 der Schlitze 8 jeweils zueinander beabstandet sind.

## Patentansprüche

1. Anordnung (1) zur Herstellung einer elektrisch leitfähigen Verbindung zwischen einem ersten Maschinenelement (2) und einem zweiten Maschinenelement (3), umfassend eine elektrisch leitfähig ausgebildete Scheibe (4), welche an einem Tragkörper (5) festgelegt ist, wobei die Scheibe (4) mit einer Bohrung (6) zur Aufnahme eines zweiten Maschinenelementes (3) versehen ist, **dadurch gekennzeichnet, dass** ausgehend von der umlaufenden Kante (7) der Bohrung (6) Schlitze (8) in die Scheibe (4) eingebracht sind.

2. Anordnung nach Anspruch 1, **dadurch gekennzeichnet, dass** die Schlitze (8) in radialer Richtung verlaufen.

3. Anordnung nach Anspruch1 oder 2, **dadurch gekennzeichnet, dass** die Scheibe (4) mehrere Schlitze (8) aufweist, welche gleichmäßig über den Umfang der Scheibe (4) verteilt sind.

4. Anordnung nach einem der Ansprüche 1 bis 3, **dadurch gekennzeichnet, dass** die Schlitze (8) auf der der Kante (7) abgewandten Seite in eine Erweiterung (10) münden.

5. Anordnung nach Anspruch 4, **dadurch gekennzeichnet, dass** über den Umfang betrachtet jeder zweite Schlitz in einer Erweiterung (10) mündet.

6. Anordnung nach Anspruch 5, **dadurch gekennzeichnet, dass** die Erweiterung (10) kreisförmig ist, wobei der Durchmesser der Erweiterung (10) größer ist als der Abstand der beiden, den Schlitz (8) begrenzenden Kanten (12).

7. Anordnung nach einem der Ansprüche 1 bis 6, **dadurch gekennzeichnet, dass** die Scheibe (4) aus porösem Material ausgebildet ist.

8. Anordnung nach Anspruch 7, **dadurch gekennzeichnet, dass** die Scheibe (4) zumindest einseitig mit einer elektrisch leitfähigen Imprägnierung versehen ist.

9. Anordnung nach einem der Ansprüche 1 bis 8, **dadurch gekennzeichnet, dass** der Tragkörper (5) elektrisch leitfähig ausgebildet ist.

10. Anordnung nach einem der Anspruch 9, **dadurch gekennzeichnet, dass** der Tragkörper (5) einen Innenring (5') und einen Außenring (5") aufweist, wobei die Scheibe (4) zwischen Innenring (5') und Außenring (5") festgelegt ist.

11. Anordnung nach einem der Ansprüche 1 bis 10, **dadurch gekennzeichnet, dass** die Erstreckung der Schlitze (8) in radialer Richtung zwischen 25 Prozent und 75 Prozent der Erstreckung der Scheibe (4) von der Bohrung (6) bis zur Außenkante (11) beträgt.

12. Anordnung nach einem der Ansprüche 1 bis 11, **dadurch gekennzeichnet, dass** die einander zugewandten Kanten (12) der Schlitze (8) zueinander beabstandet sind.
